# EUROPÄISCHE PATENTANMELDUNG

(11) **EP 0 761 881 A1**
(43) Veröffentlichungstag der Anmeldung: **12.03.1997**
(21) Anmeldenummer: 96111876.7
(22) Anmeldetag: 24.07.1996
(51) Int. Cl.: E01B 29/28, B23P 19/06

(54) **Schraubmaschine**

(30) Priorität: 06.09.1995 DE 19532826
(71) Anmelder: GEORG ROBEL GmbH & Co., D-81371 München (DE)
(72) Erfinder: Hertelendi, Josef, 83395 Freilassing (DE)

(57) **Zusammenfassung**

Eine Schraubmaschine (1) zum Eindrehen und Lösen von Schienenfestigungsschrauben (9) ist mit einem Motor (11) zur Energieerzeugung, einer Hydraulikpumpe (12), einem mit dieser über eine Arbeitsleitung (24) in Verbindung stehenden ersten Ölmotor (17), einem von diesem über eine Antriebswelle (16) antreibbaren Schraubkopf (13) sowie einem Druckregelventil (31) ausgestattet. Zusätzlich zum genannten ersten Ölmotor (17) ist ein zweiter Ölmotor (19) vorgesehen, der über ein Zuschaltventil (28) und ein Getriebe (21) zur wahlweisen zusätzlichen Drehmomentübertragung auf den Schraubkopf (13) ausgebildet ist.

## Beschreibung

Die Erfindung betrifft eine Schraubmaschine zum Eindrehen und Lösen von Schienenbefestigungsschrauben und -muttern, mit einem Motor zur Energieerzeugung, einer Hydraulikpumpe, einem mit dieser über eine Arbeitsleitung in Verbindung stehenden Ölmotor, einem von diesem über eine Antriebswelle antreibbaren Schraubkopf sowie einem Druckregelventil.

Eine derartige, durch die DE 29 43 938 A1 bekannte hydraulische Schraubmaschine weist eine regelbare Hydraulikpumpe und einen koaxial mit einem Schraubkopf verbundenen, diesen direkt antreibenden Ölmotor auf. Anhand eines Fördermengenreglers ist der Ölstrom stufenlos einstellbar, wobei ein Druckregler bei Erreichen eines gewünschten Druckes die Pumpe zur Vermeidung von Drehmomentspitzen auf Umlauf schaltet. Beim Anziehen von Schrauben erfolgt die erste Schraubphase mit hoher Drehgeschwindigkeit und geringem Moment, das langsame Ansteuern der genauen Endlage hingegen mit hohem Drehmoment. Bedingt durch das besonders beim Ausdrehen der Schienenbefestigungsmittel notwendige hohe Drehmoment und die entsprechende Dimensionierung der Hydraulikanlage samt großem Tank ist diese Maschine durch das relativ hohe Gewicht unhandlich.

Eine weitere Schraubmaschine ist durch einen Prospekt "Universal-Schraubmaschine Robel 30.82 mit hydraulischer Drehmoment-Feinsteuerung" der Firma Robel bekannt. Diese an und für sich mechanisch über einen Verbrennungsmotor und ein Getriebe mit metallener Kupplung angetriebene Maschine ist zusätzlich mit einer zuschaltbaren Hydraulikanlage für eine exakte Steuerung des Drehmoments ausgestattet. Im Anschluß an das schnelle mechanische Vorschrauben wird das genaue bzw. gewünschte, endgültige Drehmoment mit hydraulischer Unterstützung erzielt. Diese Maschine ist ebenfalls eher schwer und daher ergonomisch ungünstig in der Handhabung.

Die Aufgabe der vorliegenden Erfindung besteht nun in der Schaffung einer Maschine der eingangs beschriebenen Art, die unter Beibehaltung eines hydraulischen Antriebes besonders handlich und leicht manövrierbar ausgebildet ist.

Diese Aufgabe wird mit der gattungsgemäßen Schraubmaschine dadurch gelöst, daß zusätzlich zum genannten ersten Ölmotor ein zweiter Ölmotor vorgesehen ist, der über ein Zuschaltventil und ein Getriebe zur wahlweisen zusätzlichen Drehmomentübertragung auf den Schraubkopf ausgebildet ist.

Eine derart ausgebildete Schraubmaschine bietet den Vorteil, daß das Gewicht der Maschine gering gehalten werden kann, da es durch das Zuschaltventil möglich ist, beide Ölmotoren mit nur einem einzigen Hydraulikkreislauf bzw. nur einer Pumpe zu betreiben. Ebenso gewichtssparend wirkt sich auch das Fehlen einer mechanischen Kupplung aus. Diese ist bei der erfindungsgemäßen Maschine hinfällig, da das Umschalten zwischen der schnellen Vorschraubgeschwindigkeit und der langsamen Schlußphase allein durch Betätigung des Zuschaltventiles erreicht werden kann. So ist auf besonders einfache Art und Weise der gewünschte Effekt erzielbar, den Schraubvorgang mit hohem Drehmoment beenden zu können, da sich dieses hohe Moment bzw. die damit einhergehende langsame Drehgeschwindigkeit automatisch durch den Druckausgleich im System nach Öffnen des Zuschaltventiles einstellt.

Die Ausbildung gemäß Anspruch 2 mit dem Freilauf des Getriebes ermöglicht unterdessen den Einsatz lediglich des ersten Ölmotors mit hoher Geschwindigkeit bzw. geringem Drehmoment, um die erste Phase des Schraubeneindrehens so rasch als möglich zu absolvieren.

Die Weiterbildung nach Anspruch 3 schafft - in Verbindung mit dem Druckregelventil - den Vorteil, daß der gesamte Arbeitszyklus bis hin zum Erreichen des exakten Anzugsmomentes vollautomatisch, d.h. ohne Schalten oder andere Handlungen seitens einer Bedienungsperson, ablaufen kann. Die beiden unterschiedlichen Schraubgeschwindigkeiten stellen sich selbsttätig gemäß der Stellung des Druckbegrenzungsventils ein, welches sich aufgrund der Vorsteuerung bei Erreichen eines bestimmten Druckes automatisch öffnet. Desgleichen schaltet das ebenfalls vorgesteuerte Druckregelventil automatisch auf Umlauf, sobald durch den ansteigenden Widerstand der Druck im Hydrauliksystem über einen bestimmten, das gewünschte Drehmoment signalisierenden Wert ansteigt.

Weitere erfindungsgemäße Vorteile ergeben sich aus Unteransprüchen und Beschreibung.

Die Erfindung wird im folgenden anhand von Zeichnungen näher beschrieben, wobei
Fig. 1 eine Seitenansicht einer erfindungsgemäß mit zwei Ölmotoren ausgebildeten Schraubmaschine und
Fig. 2 den zugehörigen schematischen Schaltplan des Hydraulikkreislaufes zeigt.

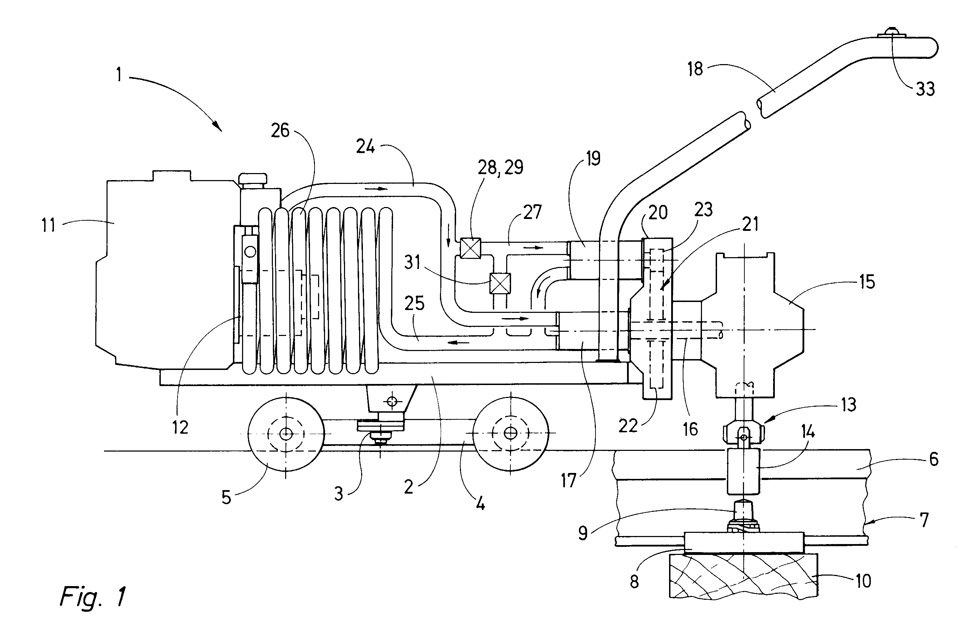

Eine in Fig. 1 ersichtliche Schraubmaschine 1 weist einen Rahmen 2 auf, der über ein Gelenk 3 mit einem Fahrgestell 4 sowohl um eine vertikale als auch um eine in Gleisquerrichtung verlaufende, horizontale Achse beweglich verbunden ist. Dieses Fahrgestell 4 ist über zwei Doppelspurkranzrollen 5 auf einer Schiene 6 eines Gleises 7 abrollbar. Die Schienen 6 ruhen auf Rippenplatten 8 und sind anhand von Schienenbefestigungsschrauben 9 mit Schwellen 10 verbunden.

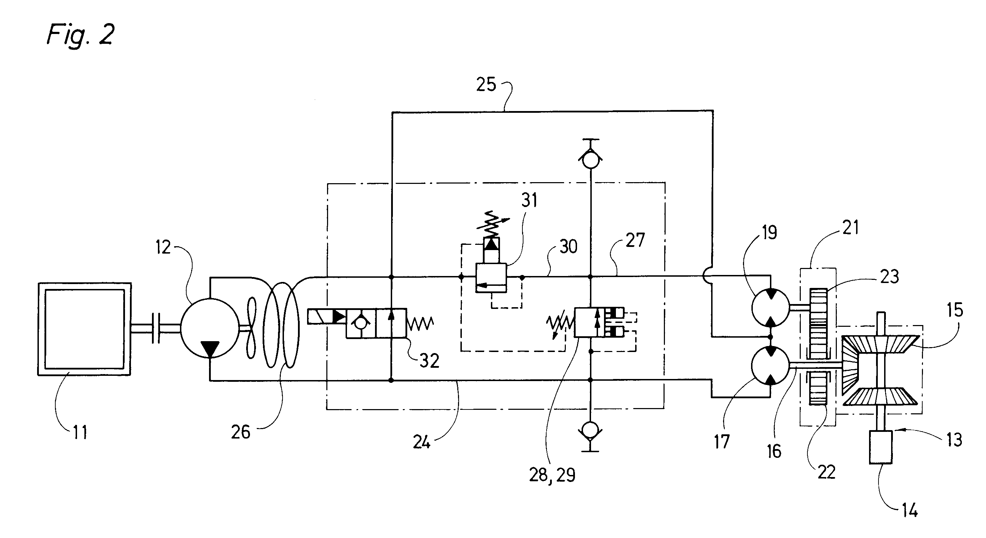

Auf dem Rahmen 2 sind ein - als Verbrennungsmotor ausgebildeter - Motor 11 und eine Hydraulikpumpe 12 in Form einer Zahnradpumpe befestigt, die aus Balancegründen am einen Längsende des Rahmens 2 angeordnet sind. Am gegenüberliegenden Ende des Rahmens befindet sich ein eine senkrecht stehende Schraubspindel 14 aufweisender Schraubkopf 13, der über ein Winkelgetriebe 15 mit einer waagrecht verlaufenden Antriebswelle 16 eines ersten Ölmotors 17 verbunden ist. Das Winkelgetriebe 15 ist mit einer Wendestufe ausgestattet, die ein Umkehren der Drehrichtung der Schraubspindel 14 ermöglicht (siehe Fig.2). Ein Bügel 18 dient zum manuellen Heben bzw. Senken und Seitenverschwenken des den Schraubkopf 13 aufweisenden Endes des Rahmens 2 um das Gelenk 3.

Parallel zum ersten Ölmotor 17 ist - zur wahlweisen zusätzlichen Drehmomentübertragung auf den Schraubkopf 13 - ein zweiter Ölmotor 19 vorgesehen, der mit einem Gehäuse 20 eines Getriebes 21 verbunden ist. Dieses einstufig ausgebildete Getriebe 21 weist ein koaxial zur Antriebswelle 16 angeordnetes Freilaufrad 22 auf, welches mit einem Antriebsritzel 23 des zweiten Ölmotors 19 in permanentem Eingriff steht und eine vom Getriebe 21 unabhängige Rotation der Antriebswelle 16 durch den ersten Ölmotor 17 gestattet. Die beiden Ölmotoren 17,19 sind über eine Arbeitsleitung 24 von der Hydraulikpumpe 12 beaufschlagbar und sind weiters an eine Rückflußleitung 25 angeschlossen, die teilweise in Form einer Kühlschlange 26 ausgebildet ist.

Wie nun auch anhand der Fig. 2 genauer zu erkennen, ist die Saugseite des zweiten Ölmotors 19 mit der Arbeitseitung 24 (und somit der Hydraulikpumpe 12) über eine Zuleitung 27 verbunden, in der ein Zuschaltventil 28 angeordnet ist. Dieses ist als vorgesteuertes Druckbegrenzungsventil 29 ausgebildet, das bei Erreichen eines vorbestimmten Druckes in der Arbeitsleitung 24 aktiviert bzw. geöffnet wird. Die Zuleitung 27 steht mit der Rückflußleitung 25 über eine Leitung 30 in Verbindung, die ein Druckregelventil 31 beinhaltet. Dieses ist ebenfalls vorgesteuert und schaltet bei Erreichen eines vorbestimmten Druckes in der Zuleitung 27 auf Umlauf. Zusätzlich ist noch zwischen Arbeitsleitung 24 und Rückflußleitung 25 ein magnetisch gesteuertes Umlaufventil 32 vorgesehen, mit dem (gemäß der hier gezeigten Stellung des Ventils) beide Ölmotoren 17,19 bei laufender Hydraulikpumpe 12 außer Betrieb genommen werden können.

Zu Beginn eines Arbeitseinsatzes zum Eindrehen von Schienenbefestigungsschrauben 9 bzw. Muttern wird die Schraubspindel 14 anhand des Bügels 18 auf die Schraube aufgesetzt. Danach erfolgt durch Schließen des Umlaufventiles 32 über einen Bedienungsschalter 33 ein Beaufschlagen des ersten Ölmotors 17 über die Arbeitseitung 24 (bei geschlossenem Zuschaltventil 28). Durch den Freilauf des Getriebes 21 ist der zweite Ölmotor 19 hierbei formschlüssig nicht an die Antriebswelle 16 gekoppelt. Der erste Ölmotor 17 treibt nun die Schraubspindel 14 mit hoher Geschwindigkeit an, wobei in dieser ersten Einschraubphase von der Schraube nur sehr geringer Widerstand entgegengebracht wird. Sobald die Schraube jedoch fester angezogen ist, kommt es zu einem Ansteigen des Druckes in der Arbeitsleitung 24 infolge des nun erforderlichen höheren Drehmomentes. Bei Erreichen eines Druckes von 120 bar in der Arbeitsleitung 24 öffnet das vorgesteuerte Zuschaltventil 28 bzw. Druckbegrenzungsventil 29 selbsttätig, und der zweite Ölmotor 19 wird parallel zum ersten Ölmotor 17 beaufschlagt. Dabei erfolgt, bedingt durch das Vorhandensein des Getriebes 21 mit dem Freilauf, automatisch ein kraftmäßiger Ausgleich zwischen den beiden Ölmotoren 17 und 19, der in einer zweiten, langsameren Drehgeschwindigkeit mit dementsprechend höherem, auf die Antriebswelle 16 übertragenen Drehmoment resultiert, mit dem die Schraube in die gewünschte Endstellung festgezogen wird. Das Erreichen derselben wird durch das Ansteigen des Druckes im Hydrauliksystem auf einen vorbestimmten Wert signalisiert, bei dem das Druckregelventil 31 aktiviert wird und - durch automatisches Umschalten auf Umlauf - die Ölmotoren 17,19 außer Betrieb nimmt. Hiermit wird der Schraubvorgang beendet, ohne daß dazu irgendeine Handlung der Bedienungsperson erforderlich wäre.

## Patentansprüche

1. Schraubmaschine (1) zum Eindrehen und Lösen von Schienenbefestigungsschrauben (9) und -muttern, mit einem Motor (11) zur Energieerzeugung, einer Hydraulikpumpe (12), einem mit dieser über eine Arbeitsleitung (24) in Verbindung stehenden Ölmotor (17), einem von diesem über eine Antriebswelle (16) antreibbaren Schraubkopf (13) sowie einem Druckregelventil (31), dadurch gekennzeichnet, daß zusätzlich zum genannten ersten Ölmotor (17) ein zweiter Ölmotor (19) vorgesehen ist, der über ein Zuschaltventil (28) und ein Getriebe (21) zur wahlweisen zusätzlichen Drehmomentübertragung auf den Schraubkopf (13) ausgebildet ist.

2. Schraubmaschine nach Anspruch 1, dadurch gekennzeichnet, daß das zur Drehmomentübertragung auf die Antriebswelle (16) ausgebildete Getriebe (21) ein Freilaufrad (22) für eine vom Getriebe (21) unabhängige Rotation der Antriebswelle (16) durch den ersten Ölmotor (17) aufweist.

3. Schraubmaschine nach Anspruch 1, dadurch gekennzeichnet, daß das Zuschaltventil (28) als vorgesteuertes Druckbegrenzungsventil (29) ausgebildet ist.

4. Schraubmaschine nach Anspruch 1, 2 oder 3, dadurch gekennzeichnet, daß zwischen der Antriebswelle (16) und dem Schraubkopf (13) ein Winkelgetriebe (15) mit Wendestufe angeordnet ist.
